# EUROPÄISCHE PATENTANMELDUNG

(11) **EP 0 655 795 A2**
(43) Veröffentlichungstag der Anmeldung: **31.05.1995**
(21) Anmeldenummer: 94118586.0
(22) Anmeldetag: 25.11.1994
(51) Int. Cl.: H01M 8/12, H01M 4/88

(54) **Brennstoffzelle und Verfahren zur Herstellung der Anode**

(30) Priorität: 27.11.1993 DE 4340486
(71) Anmelder: FORSCHUNGSZENTRUM JÜLICH GMBH, D-52425 Jülich (DE)
(72) Erfinder: Naoumidis, Dr. Aristides, 52428 Jülich (CH)

(57) **Zusammenfassung**

Die Erfindung bezieht sich auf eine Brennstoffzelle mit einem Festkörper (SOFC) oder einem Salzschmelzelektrolyten (MCFC). Die Anode der Brennstoffzelle besteht erfindungsgemäß aus einem Feststoffgemisch aus Wolframcarbid und einem ionenleitenden Oxid wie Yttrium-vollstabilisiertes Zirkoniumoxid (YSZ) oder aus einem dotierten Cerat oder Thorat der Erdalkalien.

Die Erfindung bezieht sich ferner auf ein Verfahren zur Herstellung der Anode. Zur Bildung des Feststoffgemisches wird eine Mischung aus YSZ-Pulver und WO₃ hergestellt und diese Mischung in einer CO/CO₂-Atmosphäre im Temperaturbereich von 600 - 1000°C in eine YSZ-WC-Mischung umgewandelt.

## Beschreibung

Die Erfindung bezieht sich auf eine Brennstoffzelle mit einem Festkörper (SOFC)- oder einem Salzschmelzelektrolyten (MCFC), (SOFC = Solid Oxide Fuel Cell; MCFC = Molted Carbonate Fuel Cell). Sie bezieht sich ferner auf ein Verfahren zur Herstellung der Anode.

Eine Hochtemperatur-Brennstoffzelle mit einem Festkörperelektrolyten (SOFC) erfordert während des Betriebs eine hohe Zuverlässigkeit aller Funktionsteile über eine adäquate Zeitdauer. Um dies zu erreichen, sind derzeit weltweit Systeme mit unterschiedlicher Größe im Versuch. Dabei werden im allgemeinen die sog. klassischen Materialien mit verschiedenen Modifikationen verwendet.

Diese sind:
- das mit Yttrium (8 mol%) vollstabilisierte Zirkoniumoxid (YSZ) als Elektrolyt,
- der mit Strontium dotierte Perowskit, Lanthan-Manganit, als Luftelektrode,
- der CERMET aus einer Mischung von metallischem Nickel und YSZ, als Brennstoffelektrode,
- eine metallische (Cr-Basis-Legierung) oder keramische (dotierter Perowskit aus Lanthan-Chromit) Platte als Interkonnektor.

Eines der schwerwiegenden Probleme dieses Systems liegt bei der Brennstoffelektrode, der Anode. Aufgrund der thermodynamischen Instabilität der Grenzfläche zwischen Metall und Keramik neigt das Metall der Anode zur Restrukturierung mit dem Ergebnis des Verlustes der elektrochemischen Aktivität und des Zusammenbruchs der elektrischen Leitfähigkeit der Elektrode. Dieser Effekt ist besonders stark im Falle der Kontamination von Nickel mit Verunreinigungen, wie z.B. Schwefel oder Schwefelverbindungen bei der Verwendung von gasförmigen Brennstoffen aus der Vergasung von verschiedenen Kohleprodukten. Weiterhin zeigt das Metall Ni eine zu hohe katalytische Wirkung im Falle der inneren Reformierung eines Methan-Wasserdampf-Gemisches, wobei die Elektrode durch Abscheidung von Kohlenstoff an der Dreiphasen-Grenze vergiftet werden kann. Vorschläge, durch einen teilweisen oder vollständigen Ersatz von Ni durch Pd oder Co die hohe katalytische Wirkung bei der Reformierung zu reduzieren, sind bereits in Erprobung. Mit diesen Systemen können jedoch die Probleme der Instabilität der Grenzfläche im CERMET nicht gelöst werden.

Die erfindungsgemäße Lösung dieser Probleme besteht in einer Brennstoffzelle der eingangs bezeichneten Art, bei der die Anode aus einem Feststoffgemisch aus Wolframcarbid und einem ionenleitenden Oxid wie Yttriumvollstabilisiertes Zirkoniumoxid (YSZ) oder aus einem dotierten Cerat oder Thorat der Erdalkalien besteht. Bei der erfindungsgemäßen Anode ist somit das metallische Nickel durch Wolframcarbid ersetzt. Diese Anode vermeidet alle bisher beobachteten Nachteile einer CERMET-Anode.

Das Feststoffgemisch der Anode besteht dabei zweckmäßigerweise aus 30 - 80 Vol% Wolframcarbid.

Das erfindungsgemäße Verfahren zur Herstellung der Anode besteht darin, daß zur Bildung des Feststoffgemisches eine Mischung von YSZ-Pulver und WO₃ oder einer Wolframverbindung, die durch thermische Zersetzung WO₃ bildet, hergestellt wird, und diese Mischung anschließend in einer CO/CO₂-Atmosphäre im Temperaturbereich von 600 - 1000°C in eine YSZ-WC-Mischung umgewandelt wird. Dabei wird als Wolframverbindung zweckmäßigerweise Wolframsäure oder Ammoniumwolframat eingesetzt und das Pulvergemisch ggf. als Paste durch Siebdruck auf der Elektrolytoberfläche aufgetragen.

WC wurde mit YSZ auf unterschiedliche Weise vermischt und beispielsweise mit bekannten Methoden auf die Oberfläche des Elektrolyts, und zwar als Anode auf dem Elektrolyt der SOFC aufgetragen. Das Substrat ist dann der Elektrolyt aus YSZ oder beispielsweise SrCe(Yb)O₃. (3 - 5 % der Ce ist durch Yb ersetzt). Elektrochemische Tests zur Bestimmung der Polarisationsspannung dieser Halbzelle haben ergeben, daß dieses System ein ähnliches Verhalten wie eine Platinelektrode besitzt.

Eine alternative Methode besteht darin, den Elektrolyten der SOFC auf die zuvor hergestellte Anode aufzubringen.

Weitere Untersuchungen zur Bestimmung der Langzeitstabilität dieses Systems haben ergeben, daß nach einer Auslagerung des Festkörpergemisches in einer H₂-Atmosphäre von über 1000 h bei 1100°C keine Veränderung des Gefüges, d.h. keine Agglomeration der einen oder der anderen Phase stattgefunden hat. Ein etwas kürzerer Versuch über 350 h mit einem solchen Gemisch bei 1000°C in einer H₂S-haltigen Wasserstoffatmosphäre führte ebenfalls zu keiner feststellbaren Gefügeveränderung.

In der Zeichnung ist
- in Figur 1: die Pulverherstellung für die erfindungsgemäße Anode der SOFC und
- in Figur 2: die Herstellung einer Anode der SOFC
im Fließschema wiedergegeben.

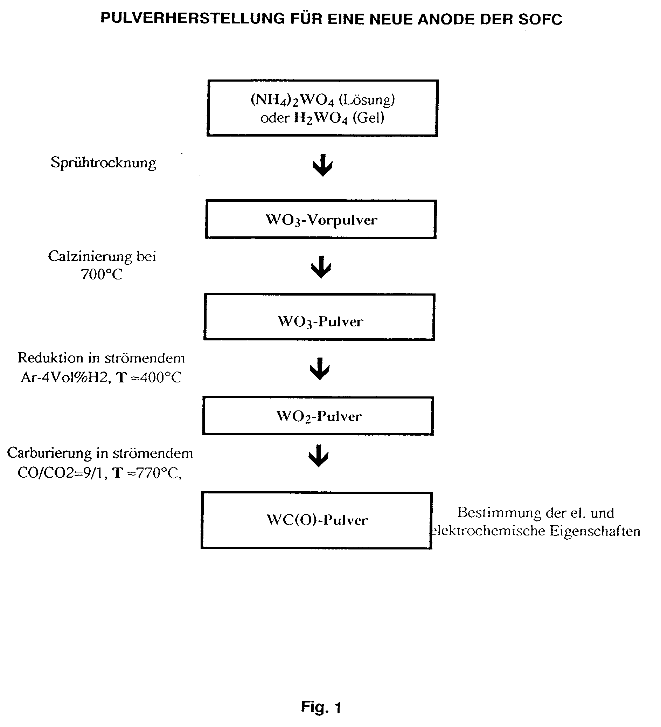

Die in Figur 1 angegebene Sprühtrocknung (wie in Int. Conf. on "Material by Powder Technology PTM", 23 - 26, March 1993, beschrieben) führt zu einer günstigen Pulvermorphologie bereits bei der Zersetzung des Ausgangsmaterials, sowohl des Ammoniumwolframats als auch eines Gels von Wolframsäure.

Das durch die Methode der Sprühtrocknung hergestellte Pulver (Figur 1) kann für die Herstellung der Mischung mit YSZ verwendet werden. Dabei kann sowohl das durch die Sprühtrocknung hergestellte feinkörnige WO₃ als auch das Endprodukt WC(O) Verwendung finden. Im zweiten Fall sollte auch die Carburierungsstufe wiederholt werden, um die Aktivität der Anode nicht zu beeinträchtigen.

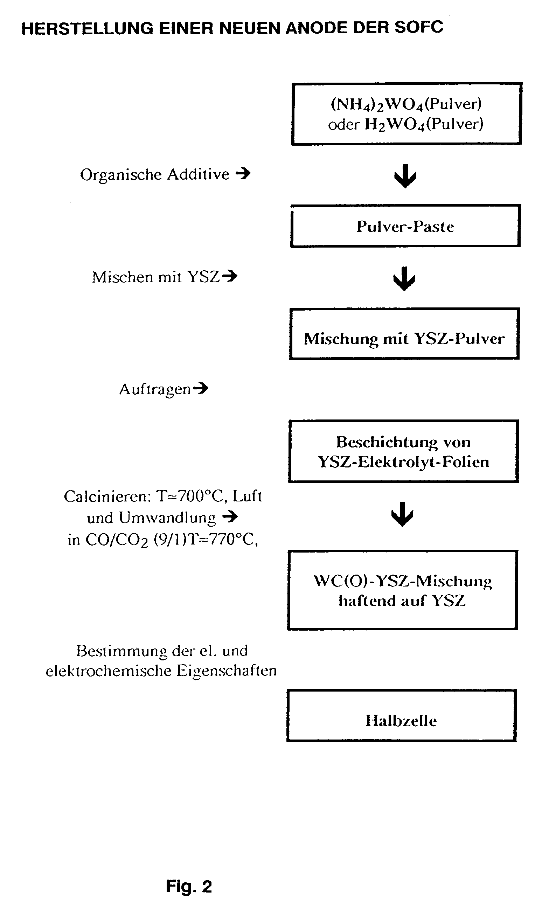

Ergänzende Bemerkungen zur "Herstellung einer Anode der SOFC" gemäß Figur 2:

### Ausführungsbeispiele:

Eine Mischung aus YSZ-Pulver (gekauft oder in üblicher Weise hergestellt) und z.B. H₂WO₄-Pulver wurde auf den Elektrolyt aufgetragen, so daß nach der Calcinierung und Carburierung die neue Anode in der gewünschten Form gebildet wurde.

Es wurde ein aus Zellulose als Binder und einem Lösungsmittel bestehendes organic additiv verwendet.

Mehrere Anoden eines Anteils von Wolfram-Carbid von 30 %, 40 %, 50 %, 60 % und 70 % wurden hergestellt, wobei sie in einer CO/CO₂-Atmosphäre eines Verhältnisses von CO zu CO₂ von 90 : 10 bei einer Temperatur von etwa 900°C über 2 Std. erhitzt wurden.

Es wurde keine Änderung des Gefüges (überprüft durch optische Metallographie und Rasterelektronenmikroskopie) und keine Herabsetzung der elektrischen Leitfähigkeit festgestellt.

## Patentansprüche

1. Brennstoffzelle mit einem Festkörper-(SOFC) oder einem Salzschmelzelektrolyten (MCFC),
**dadurch gekennzeichnet,**
daß die Anode aus einem Feststoffgemisch aus Wolframcarbid und einem ionenleitenden Oxid wie Yttrium-vollstabilisiertes Zirkoniumoxid (YSZ) oder aus einem dotierten Cerat oder Thorat der Erdalkalien besteht.

2. Brennstoffzelle nach Anspruch 1,
**dadurch gekennzeichnet,**
daß das Feststoffgemisch der Anode aus 30 - 80 Vol% WC besteht.

3. Verfahren zur Herstellung der Anode gemäß
Anspruch 1,
**dadurch gekennzeichnet,**
daß zur Bildung des Feststoffgemisches eine Mischung von YSZ-Pulver und WO₃ oder einer Wolframverbindung, die durch thermische Zersetzung WO₃ bildet, hergestellt wird, und diese Mischung anschließend in einer CO/CO₂-Atmosphäre im Temperaturbereich von 600 - 1000°C in eine YSZ-WC-Mischung umgewandelt wird.

4. Verfahren nach Anspruch 3,
**dadurch gekennzeichnet,**
daß als Wolframverbindung Wolframsäure oder Ammoniumwolframat eingesetzt wird und das Pulvergemisch auf der Elektrolytoberfläche aufgetragen wird.

5. Verfahren nach Anspruch 4,
**dadurch gekennzeichnet,**
daß das Pulvergemisch als Paste durch Siebdruck aufgetragen wird.
